# EUROPÄISCHE PATENTSCHRIFT

(11) **EP 3 715 666 B1**
(45) Veröffentlichungstag und Bekanntmachung des Hinweises auf die Patenterteilung: **11.10.2023**
(21) Anmeldenummer: 20160327.1
(22) Anmeldetag: 02.03.2020
(51) Int. Cl.: F16D 69/02

(54) **REIBBELAG, VERFAHREN ZU SEINER HERSTELLUNG UND SEINE VERWENDUNG**
FRICTION LINING, METHOD FOR ITS PREPARATION AND ITS USE
GARNITURE DE FRICTION, SON PROCÉDÉ DE FABRICATION ET SON UTILISATION

(30) Priorität: 27.03.2019 DE 102019107915
(43) Veröffentlichungstag der Anmeldung: 30.09.2020
(73) Patentinhaber: TMD Friction Services GmbH, 51381 Leverkusen (DE)
(72) Erfinder: MÜLLER, Georg, 50678 Köln (DE); WEGMANN, Enrique, 42799 Leichlingen (DE)
(74) Vertreter: Müller, Eckhard

(56) Entgegenhaltungen:
- EP-A1- 3 048 325
- US-A1- 2002 179 199

## Beschreibung

Die Erfindung betrifft die Verwendung von Aluminiumlegierungen als Korrosionsschutzmittel in Reibbelägen, welche organisches Harz und kein Zink und keine Zinklegierung enthalten.

Übliche Reibbelagsmischungen weisen grundsätzlich folgende Zusammensetzungen auf:
- Metalle (Fasern und Pulver, meist eisenhaltig),
- Füllstoffe,
- Gleitmittel (Festschmierstoffe) und
- organische Bestandteile wie z.B. Harze, Kautschuke oder organische Fasern und Füllstoffe.

Dabei umfassen die Metallanteile der Reibbeläge in der Regel Zink oder Zinklegierungen, welche hauptsächlich als Korrosionsschutz dienen und z.B. das Auftreten von Rost in den Stahl- und Gusskomponenten der Bremsen und Kupplungen, insbesondere an den eisenhaltigen Reibungspartnern, wie Bremsscheiben und Bremstrommeln, und an den eisenhaltigen Bestandteilen der Reibbelagsmischung verhindern sollen.

Der Einsatz von Zink in Reibbelagsmischungen wird allerdings zunehmend kritisch gesehen. Zink wird dabei als Schwermetall eingeordnet, und eine Erhöhung der Zinkkonzentration in der Umwelt soll aus gesundheitlichen und ökologischen Gesichtspunkten möglichst gering gehalten werden.

Bzgl. des Korrosionsschutzes von Bremsanlagen auch ohne die Verwendung von Zink sind im Stand der Technik bereits sehr unterschiedliche Lösungen vorgeschlagen worden.

Die EP 2 778 462 A1 beschreibt eine galvanische Kontaktierung der Bremse, wobei die angelegte Spannung so gewählt wird, dass keine Korrosion auftritt.

Die EP 3 327 099 A1 schlägt einen Reibbelag mit alkalischem pH-Wert vor, wodurch Oxidationsreaktionen unterdrückt werden sollen.

Aus der EP 0 079 732 A1 ist es bekannt, das Auftreten von Rost in und an den Stahl- und Gusskomponenten von Bremsen und Kupplungen dadurch zu vermeiden, dass das Reibmaterial mit einem Metall beschichtet wird. Dieses Metall bildet eine relativ zu Stahl unedlere Metallfläche und besteht aus einer Zink-, Aluminium- oder Magnesium-Legierung. Dieses Verfahren verhindert aber lediglich das Rosten während des Transports der so ausgerüsteten Fahrzeuge, da diese dünne Schutzschicht bereits bei wenigen Betätigungen von Bremsen oder Kupplungen wieder entfernt wird.

EP 3 048 325 A1 betrifft ein Reibmaterial bzw. einen Reibbelag, der thermisch und mechanisch stark belastbar ist und gleichzeitig die Anforderungen an einen möglichst geringen Kupfergehalt erfüllt.

US 2002/179 199 A1 bezieht sich auf eine Bremsscheibe, welche ein sog. metal-containing material in Form einer Aluminiumlegierung aufweist.

Die EP 1 097 313 B1 sieht die Verwendung einer Aluminium-Zink-Legierung als Korrosionsschutz in Reibbelägen vor.

Allerdings kann der Einsatz solcher Legierungen mit verschiedenen Nachteilen verbunden sein. So kann der Zusatz von AlZn5 bei manchen Reibbelagsmischungen zu einer Schaum- und Aluminiumoxidflocken-Bildung auf der Belagoberfläche führen. Ferner konnte festgestellt werden, dass der Reibbelag in Abhängigkeit von der AlZn5-Konzentration aufquellen kann. Schließlich ist die Herstellung von AlZn5 relativ aufwendig und wird aufgrund seines Zinkgehalts als umweltbelastend eingestuft, was wiederum Auswirkungen auf die entsprechende Abfallentsorgung hat.

Aufgabe der vorliegenden Erfindung ist somit die Bereitstellung von Reibbelägen bzw. Reibbelagsmischungen, bei denen vollständig zumindest jedoch möglichst weitgehend auf den Einsatz von Zink, Zinkverbindungen oder Zinklegierungen verzichtet werden kann.

Diese erfindungsgemäße Aufgabe wird grundsätzlich dadurch gelöst, dass auf den Einsatz von Zink verzichtet wird und als Zinkersatz eine Legierung eingesetzt wird, die weniger reaktiv als z.B. AlZn5 oder eine andere Zinklegierung ist, aber dennoch ausreichenden Korrosionsschutz bietet. Es wurde gefunden, dass die mit dem Einsatz einer Zinklegierung, wie z.B. AlZn5, verbundenen Probleme in erster Linie auf die hohe chemische Reaktionsfähigkeit dieser Substanzen zurückzuführen sind.

Die erfindungsgemäßen Reibbelagsmischungen weisen daher bevorzugt Reaktivitäten auf, die zwischen denen einer (sonst in der Zusammensetzung gleichen Reibbelagsmischung/Reibbelag) Zn-Metall-haltigen und einer AlZn5-haltigen Reibbelagsmischung bzw. des daraus hergestellten Reibbelags liegen.

Zur Bestimmung der Eignung einer Zn-freien Legierung als Korrosionsschutz in ansonsten üblichen oder gängigen Reibbelägen (bzgl. der qualitativen und quantitativen Zusammensetzung) werden verschiedene Legierungen in eine übliche Reibbelagsmischung, die kein Zink oder eine Zinklegierung enthält, mit eingemischt und anschließend zu Reibbelägen oder Probekörpern verpresst. Als Referenzmischungen dienen dann entsprechende Zn-Pulver-haltige und AlZn5-haltige Reibbeläge.

Die im Rahmen der vorliegenden Erfindung angewandten Tests sind bevorzugt:
1. Einlagerung der Reibbeläge oder Probekörper für 14 Tage bei Raumtemperatur in eine 5 Gew.-% NaCl-Lösung,
2. Voltametrietest: Bestimmung des Redoxpotentials/Redox-Spannung E° nach DIN38404-6 und
3. Galvanometrietest: Bestimmung der elektrischen Ladungsdichte.

Diese Tests sind dem Fachmann bekannt und z.B. in der DIN-Norm 50918 Korrosion von Metallen beschrieben.

Die Auswertung des ersten Tests erfolgt optisch, gravimetrisch und durch eine Dimensionsbestimmung der Probekörper. Dabei wird überprüft (optisch), ob eine Rostbildung an den Probekörpern feststellbar ist, sowie eine Farbbestimmung der NaCl-Lösung vorgenommen. Bei dem Voltametrietest wird festgestellt, ob der Reibbelag gemäß der Erfindung mindestens ein negatives Redoxpotential (Eₒ) aufweist, das zwischen dem einer Zn-haltigen und einer AlZn5-haltigen Referenzmischung liegt. Bei der Bestimmung der Ladungsdichte (Galvanometrietest) sollte ein Wert erreicht werden, der mindestens genauso hoch ist wie der der Zn-haltigen Referenzmischung. Bei den beschriebenen Tests entspricht der Anteil von Zn-Metall oder Zn-Legierung der Referenzmischungen dem Anteil an nicht Zn-haltigen Legierungen in den erfindungsgemäßen Mischungen (jeweils ausgedrückt in Gew.-% vom fertigen Reibbelag).

Als besonders geeignet zur Lösung der vorliegenden Aufgabe haben sich AI-Legierungen mit Magnesium (Mg) oder Titan (Ti) erwiesen. Auch andere Legierungspartner, wie z.B. Silizium (Si), sind grundsätzlich geeignet. Dabei kann es sich um binäre, ternäre oder quaternäre Legierungssysteme handeln, von denen die binären Aluminiumlegierungen besonders bevorzugt sind. Diese binären Systeme vom Typ AlₓZ_{y} (mit Z bevorzugt gleich Mg und Ti und x = 10 - 90 Gew.-% und y = 10 - 90 Gew.-%) haben sich bezüglich Elektroden- oder Redoxpotential (= Reaktivität), Formstabilität und Ladungsdichte als besonders geeignet erwiesen. Insbesondere sind hier Legierungen wie AITi10 und AIMg50 zu nennen.

Die erfindungsgemäß verwendeten Legierungen enthalten eines oder mehrere der folgenden Metalle Mg, Ti, Si, Ba, Sr, Ca, Be, Zr, Cr, Fe, Sn, Bi und Aluminium. Die erfindungsgemäßen Reibbelagmischungen können auch Pulver einer Metallmischung aus den genannten Komponenten enthalten. Die Herstellung der Legierungen erfolgt durch Aufschmelzen und Homogenisieren der Komponenten zu einem feindispersen System. Eine Vielzahl solcher Legierungen ist im Handel erhältlich.

Der Anteil der erfindungsgemäß verwendeten Legierungen an der Reibbelagmischung bzw. dem fertigen Reibbelag kann bevorzugt zwischen 0,5 - 15 Gew.-% betragen. Diese Legierungen sind in allen gängigen Reibbelägen einsetzbar, in denen nach dem Stand der Technik Zn oder Zn-Legierungen eingesetzt werden. Eine besondere Anpassung der übrigen Komponenten des Reibbelags an die hier beschriebenen Legierungen ist somit nicht erforderlich. In den Mischungen des Standes der Technik wird bevorzugt lediglich die Zn- oder Zn-Legierungskomponente durch die erfindungsgemäßen Legierungen ersetzt. Der Ersatz kann in der Regel auch bezgl. des jeweiligen Gewichtsanteils am Reibbelag 1:1 oder mit kleinen Abweichungen hiervon erfolgen.

Das Vorsehen eines relativ zu Eisen oder Stahl unedleren Metalls in der Reibmaterialmischung verhindert das Rosten des Reibungspartners aus Stahl oder Eisen. Die Aluminium-Legierungsbestandteile im Reibbelag bilden eine Opfer-Anode, so dass ein Rosten und insbesondere ein Festrosten des Reibungspartners an dem Reibbelag zuverlässig vermieden werden kann. Vorteilhaft ist dabei, dass die Opfer-Anode sich mit dem Verschleiß des Reibbelages stets erneuern kann.

Das Wirksamwerden von korrosionshemmenden Partikeln hängt davon ab, dass ihre Verteilung über den Querschnitt der Reibbeläge gleichmäßig erfolgt. Dies gelingt in besonders günstiger Weise mit einer erfindungsgemäßen Legierung, die vorzugsweise in Pulverform zugegeben wird.

Ein weiterer Vorteil lässt sich mit den erfindungsgemäß verwendeten Legierungen dann erreichen, wenn sie in Pulverform in den Reibbelag eingebracht werden. Die Zugabe in Pulverform verringert die unter bestimmten Umgebungsbedingungen auftretenden Anhaftungen von Eisen- und Stahlteilen an den Reibbelägen von Bremsen und Kupplungen und vermindert damit die sogenannte "Haftkorrosion".

Die erfindungsgemäß einsetzbaren Legierungen werden bevorzugt in Partikelform in die Reibmaterialmischung eingebracht. Als Schmierstoff können Zinnsulfide mit einem Gewichtsanteil zwischen ca. 0,5 bis 10 Gew.-%, vorzugsweise ca. 2 bis 8 Gew.-%, enthalten sein.

Zum Herstellen des Reibbelages ist vorgesehen, die vorzugsweise in Strang- oder Blockform vorliegenden Aluminium-Legierungen zunächst zu verflüssigen und anschließend zu verdüsen, um im Wesentlichen kugelförmige Partikel herzustellen. Diese Partikel werden dann mit einer üblichen Reibmaterialmischung vermischt und bei bekannten Temperaturen und Drücken zu einem Reibbelag verpresst.

Es können aber auch direkt aus der Schmelze der Legierung pulverförmige Partikel gebildet werden, z.B. durch Verdüsen oder durch Schleudern über den Rand einer rotierenden Scheibe. Die Partikelgröße der erfindungsgemäß eingesetzten Legierungen liegt bevorzugt im Bereich von 100 µm und 700 µm. Auch sind Aluminiumlegierungen mit weiteren Metallen, wie z.B. AI/Mg-Legierungen, in Partikelform im Handel erhältlich.

Als Füllstoffe für erfindungsgemäße Reibbeläge können einzeln oder in Kombination mit anderen Füllstoffen, Metalloxide, Metallsilikate und/oder Metallsulfate enthalten sein. Die faserigen Substanzen bestehen vorzugsweise aus Aramidfasern und/oder anderen organischen oder anorganischen Fasern. Als Metalle können außer der Aluminium-Legierung beispielsweise Stahlwolle und/oder Kupferwolle enthalten sein.

Als Schmierstoffe werden vorzugsweise Zinnsulfide mit einem Gewichtsanteil von 0,5 bis 10 Gew.-%, vorzugsweise 2 bis 8 Gew.-%, verwendet. Die Zinnsulfide können beispielsweise als Pulver der Reibbelagsmischung beigefügt werden.

Die erfindungsgemäß verwendeten Legierungen können grundsätzlich in jeder beliebigen Reibbelagsmischung verwendet werden. Die Herstellung der erfindungsgemäßen Reibbeläge kann nach konventionellen und aus dem Stand der Technik bekannten Methoden erfolgen, d.h. durch Mischen aller Ausgangskomponenten und Verpressen der so erhaltenen Reibbelagsmischung bei erhöhtem Druck und erhöhter Temperatur. Dabei wird die als Korrosionsschutz dienende Al-Legierung im typischen Anwendungsfall als Pulver mit den übrigen Mischungsbestandteilen in einen Mischer gegeben, wodurch beim Mischvorgang die Legierungspartikel homogen in dem Reibmaterial verteilt werden. Dies bedeutet weiterhin, dass durch den Reibprozess beim Einsatz eines entsprechenden Bremsbelags immer neues Korrosionsschutzmaterial an die Reibbelagsoberfläche gelangt. Dadurch herrschen während des Anwendungszyklus des Reibbelags auf dessen Oberfläche immer einheitliche oder konstante Bedingungen.

### Beispiel

Eine erfindungsgemäß hergestellte Reibmaterialmischung kann beispielsweise wie folgt zusammengesetzt sein:

| Rohstoffe | Gew.-% |
|---|---|
| Stahlwolle | 15 - 25 |
| Kupfer und/oder Kupferlegierungen | 3 - 20 |
| Aluminium-Mg/Ti-Legierung | 0,5 - 15 |
| Aluminiumoxid | 0,5 - 2 |
| Glimmermehl | 5 - 8 |
| Schwerspat | 5 - 15 |
| Eisenoxid | 5 - 15 |
| Zinnsulfide | 2 - 8 |
| Graphit | 2 - 6 |
| Kokspulver | 10 - 20 |
| Aramidfaser | 1 - 2 |
| Harzfüllstoffpulver | 2 - 6 |
| Bindeharz | 3 - 7 |

Die vorliegende Erfindung betrifft somit die Verwendung der erfindungsgemäßen Al-Legierungen als Korrosionsschutz(mittel) und/oder als Ersatz von Zink-Metall und/oder Zinkverbindungen in Reibbelägen und entsprechenden Reibbelagsmischungen.

## Patentansprüche

1. Verwendung von Aluminiumlegierungen, welche neben Aluminium eines oder mehrere der folgenden Metalle Mg, Ti, Si, Ba, Sr, Ca, Be, Zr, Cr, Fe, Sn, Bi aufweisen, als Korrosionsschutzmittel in Reibbelägen, welche organisches Harz und kein Zink und keine Zinklegierung enthalten.

2. Verwendung nach Anspruch 1, **dadurch gekennzeichnet, dass** es sich bei der Al-Legierung um eine Legierung der Formel AlₓZ_{y} handelt, worin Z für Mg und/oder Ti und/oder Si steht und x und y jeweils Bereiche von 10 bis einschließlich 90 Gew.-% bedeuten.

3. Verwendung nach Anspruch 1 oder 2, **dadurch gekennzeichnet, dass** es sich bei der Al-Legierung um eine binäre Al-Mg-Legierung oder eine Al-Ti-Legierung handelt.

4. Verwendung nach Anspruch 1 oder 2, **dadurch gekennzeichnet, dass** es sich bei der Al-Legierung um eine ternäre oder quaternäre Legierung handelt, welche Mg und/oder Ti und/oder Si enthält und bei der y für die Summe der Anteile der Komponente Z steht.

5. Verwendung nach einem der Ansprüche 1 bis 3, **dadurch gekennzeichnet, dass** es sich bei der Al-Legierung um AITi10 oder um AIMg50 handelt.

6. Verwendung nach einem der Ansprüche 1 bis 5, **dadurch gekennzeichnet, dass** die Al-Legierung in Partikelform vorliegt und eingesetzt wird.

7. Verwendung nach Anspruch 6, **dadurch gekennzeichnet, dass** die Partikel eine Größe von 100 - 700 µm aufweisen.

## Claims

1. Use of aluminium alloys which comprise not only aluminium but also one or more of the following metals Mg, Ti, Si, Ba, Sr, Ca, Be, Zr, Cr, Fe, Sn, Bi as anticorrosion agents in friction coatings containing organic resin and no zinc and no zinc alloy.

2. Use according to Claim 1, **characterized in that** the Al alloy is an alloy of formula AlxZy, wherein Z is Mg and/or Ti and/or Si and x and y each represent ranges from 10% to 90% by weight inclusive.

3. Use according to Claim 1 or 2, **characterized in that** the Al alloy is a binary Al-Mg alloy or an Al-Ti alloy.

4. Use according to Claim 1 or 2, **characterized in that** the Al alloy is a ternary or quaternary alloy which contains Mg and/or Ti and/or Si and where y represents the sum of the proportions of component Z.

5. Use according to any of Claims 1 to 3, **characterized in that** the Al alloy is AITi10 or AIMg50.

6. Use according to any of Claims 1 to 5, **characterized in that** the Al alloy is present and employed in particle form.

7. Use according to Claim 6, **characterized in that** the particles have a size of 100-700 µm.

## Revendications

1. Utilisation d'alliages d'aluminium qui comportent, outre de l'aluminium, un ou plusieurs des métaux suivants Mg, Ti, Si, Ba, Sr, Ca, Be, Zr, Cr, Fe, Sn, Bi, en tant qu'agent anticorrosion dans des garnitures de friction qui contiennent de la résine organique et ne contiennent pas de zinc ni d'alliage de zinc.

2. Utilisation selon la revendication 1, **caractérisée en ce que** pour ce qui est de l'alliage d'AI il s'agit d'un alliage de formule AlxZy, dans laquelle Z représente Mg et/ou Ti et/ou Si et x et y représentent chacun des plages de 10 à 90 % en poids inclus.

3. Utilisation selon la revendication 1 ou 2, **caractérisée en ce que** pour ce qui est de l'alliage d'AI il s'agit d'un alliage binaire Al-Mg ou d'un alliage AI-Ti.

4. Utilisation selon la revendication 1 ou 2, **caractérisée en ce que** pour ce qui est de l'alliage d'AI il s'agit d'un alliage ternaire ou quaternaire, qui contient Mg et/ou Ti et/ou Si et dans lequel y représente la somme des parties du composant Z.

5. Utilisation selon l'une des revendications 1 à 3, **caractérisée en ce que** pour ce qui est de l'alliage d'AI il s'agit d'AITi10 ou d'AIMg50.

6. Utilisation selon l'une des revendications 1 à 5, **caractérisée en ce que** l'alliage se trouve et est utilisé sous forme de particules.

7. Utilisation selon la revendication 6, **caractérisée en ce que** les particules présentent une taille de 100 - 700 µm.
